# EUROPEAN PATENT APPLICATION

(11) **EP 4 620 617 A1**
(43) Date of publication of application: **24.09.2025**
(21) Application number: 23890935.2
(22) Date of filing: 13.11.2023
(51) Int. Cl.: B24B 31/02, C25F 3/16, B23H 5/08

(54) **DEVICE FOR POLISHING SURFACES OF METAL PARTS BY SPRAYING ELECTRICALLY ACTIVE SOLID PARTICLES**

(30) Priority: 15.11.2022 ES 202230989
(71) Applicant: Steros GPA Innovative, S.L., 08030 Barcelona (ES)
(72) Inventor: SARSANEDAS MILLET, Pau, 08035 BARCELONA (ES); GARCIA EXPOSITO, Jose Antonio, 08030 BARCELONA (ES); ROMAGOSA CALATAYUD, Pau, 43350 LES BORGES DEL CAMP (TARRAGONA) (ES); PEREZ PLANAS, Miguel Francisco, 08173 SANT CUGAT DEL VALLES (BARCELONA) (ES)
(74) Representative: Elion IP, S.L.
(86) International application number: PCT/ES2023/070675
(87) International publication number: WO 2024/105293

(57) **Abstract**

Device for polishing surfaces of metal parts by means of projection of electrically active solid particles, comprising at least: An electric power source (4) with an electrode (5) that transmits electrical charge to a beam of solid particles (3) supplied from a delivery tank (6); Means for projecting said electrically active solid particles (3), preferably with a transport liquid medium, onto the surface of the part(s) (2) to be treated; And at least one rotating drum (7) designed to house one or more parts (2) with the metal surface to be treated, enabling the beam (3) of electrically active solid particles to impact them while they are tumbled inside the drum (7). Preferably, the drum (7) has a polygonal configuration and is made of non-conductive material.

## Description

### OBJECT OF THE INVENTION

The invention, as stated in the heading of this descriptive report, relates to a device for polishing surfaces of metal parts by means of the projection of electrically active solid particles, preferably using a transport liquid medium that is non-conductive or less conductive than the electrically active solid particles. This device offers advantages and characteristics, described in detail below, which represent an improvement over the current state of the art.

The object of the present invention concerns a device for polishing surfaces of metal parts by projecting electrically active solid particles. Its structural configuration essentially comprises a rotating drum, which, among other advantages, allows polishing parts without the need for any holding systems. This is a major limitation in current polishing systems, both those using electrically active solid particles and liquid electropolishing systems, which require time, engineering, design, and materials to develop the most suitable holding systems for the types of parts to be polished in each case.

### FIELD OF APPLICATION OF THE INVENTION

The field of application of the present invention lies within the industry sector dedicated to the treatment of metal surfaces, particularly focusing on the polishing of metal surfaces of parts, with applications in any field.

### BACKGROUND OF THE INVENTION

Polishing systems in which abrasive particles are projected onto the surface to be treated are known. These particles are strongly projected, producing a polishing effect proportional to the impact force, which have drawbacks such as lack of uniformity on the treated surface and overexposure of certain areas, that leads to loss of definition on edges and corners and limiting their use in precision applications or where sharpness must be maintained. Additionally, they may embed particles into the metal surface, reducing its durability, chemical resistance, and tensile strength. There are also health risks for workers due to abrasive dust and airborne microparticles generated during the process.

On the other hand, dry electropolishing systems are known, using electrically active solid particles, such as the one described in document ES2604830. It is based on friction between the workpiece and the medium composed of electrically active solid particles while applying an electric potential between the part and a counter-electrode. However, this system has limitations when polishing large or immobile elements.

To overcome these drawbacks, document PCT/ES2020/070499 also owned by the applicant of the present invention, describes a method and device for treating metal surfaces by projecting electrically active particles. This makes it possible to combine the mirror-like finish obtained with dry electropolishing using solid particles and the advantages of abrasive blasting systems, expanding the application range of the first and reducing the disadvantages of the second.

This method essentially comprises the following steps: Contact of the solid particles with the electrode of an electric source; projection of the particles toward the metal surface to be treated; transfer of electrical charge from the particles to the metal Surface.

The electricity transmission between the power source and the metal surface during projection may occur by net charge of the particles, by electrical conductivity upon contact, or by means of voltaic arcs. The electric current applied to the electrode may be direct current (DC), or an alternate current including positive and negative polarities. In some cases, the medium between the particles includes a conductive element that enhances conductivity through voltaic arcs. This element can be a carbon derivative, iodine, talc, gel rods and/or cylinders, or a source of ionizing radiation (UV, X-rays, or gamma rays), a non-ionizing radiation source (microwaves), an aerosol nebulizer and generator, and/or an ultrasound source.

The device essentially comprises an electric source with an electrode that transmits charge to the solid particles and means for projecting the electrically active solid particles, preferably using a transport liquid medium that is non-conductive or less conductive than the solid particles, onto the surface to be treated. In some cases, the power source is connected to the metal surface, thus closing the electric circuit. Propulsion of the electrically active solid particles may be performed by gravity alone, by centrifugal system, by compressed gas, or by mechanical systems.

However, one of the main limitations of this polishing method using projected electrically active solid particles, as well as for traditional liquid electropolishing, is that the parts to be polished must be fixed by some holding system so the particles can be projected to them. This requires investment in time, engineering, design, and materials to find the most suitable fixing solution for each type of part. If the parts to be polished change, for example due to different designs or to be used in different machines with new functionalities, the holding system must be adapted accordingly.

The objective of the present invention is therefore to develop an improved device for polishing parts that eliminates this limitation.

Moreover, and as a reference to the current state of the art, it should be noted that, at least to the applicant's knowledge, there is no other device for polishing surfaces of a metal part by projecting electrically active solid particles, nor any invention of similar application, that shows the same or similar technical features as those claimed herein.

### EXPLANATION OF THE INVENTION

A device for polishing surfaces of metal parts by means of the projection of electrically active solid particles, preferably using a transport liquid medium that is preferably non-conductive or less conductive than the electrically active solid particles, as proposed by the invention, is configured as the ideal solution for the objectives mentioned above, with the characterizing details that make it possible and distinguish it appropriately being specified in the claims accompanying this description.

Specifically, what the invention proposes, as mentioned above, is a device for polishing surfaces of metal parts by the projection of electrically active solid particles, preferably using a transport liquid medium that is preferably non-conductive or less conductive than the electrically active solid particles, which is essentially distinguished by comprising a rotating drum for the incorporation of the part or parts to be polished.

More specifically, a device subject of the present invention is one that comprises, at least, an electric power source with an electrode that transmits electrical charge to the solid particles, supplied for example from a delivery tank, and means for projecting said electrically active solid particles onto the surface to be treated. Preferably, the solid particles are surrounded by a transport liquid medium that is preferably non-conductive or less conductive than the electrically active solid particles. And, based on this already known configuration, it is essentially distinguished by comprising, at least, a rotating drum suitable for housing one or more parts with the metal surface to be treated and for directing the projection beam of electrically active solid particles onto them while they are being tumbled inside said drum.

Thus, the polishing by projection, on which the device of the invention is based, as described in the background section, presents a number of very significant advantages over polishing with dry or suspended electrolyte, since its application requires a pumping system and a tank. In this case, the tank has a sufficiently large volume to ensure not only proper operation but also proper renewal of the electrolyte particles, in addition to facilitating their thermal dissipation. For practical purposes, it heats up more slowly.

With the present invention, the existing application of projection for mechanical polishing is extrapolated to a new technology, where the part or parts to be polished rotate inside a drum.

The main advantage of this device is the fact that the parts can be polished without the need for any holding system, which constitutes a major limitation in polishing systems, both those using electrically active solid particles and liquid electropolishing, since time, engineering, design, and materials must be invested to find the best holding system for the parts to be polished. With the device that is the subject of the present invention, this limitation disappears, becoming a more efficient and sustainable system for polishing parts with various geometries.

It is important to note that although the device is mainly designed to polish multiple parts at the same time, it is not limited to that. That is, individual parts can also be polished, such as prostheses, hydraulic fittings, etc. Therefore, the number of parts is variable. Moreover, the more parts there are, the more electrical contacts, more surface area, and thus greater current intensity is consumed during the process.

Thanks to the rotating drum, the device provides uniform polishing across the entire geometry of the part, since during the polishing time, the random movements allows for homogeneous polishing of both the outer surfaces and cavities.

Preferably, the drum has a polygonal geometry, preferably with 6, 8, or 12 faces, although this is not a limiting condition, as the drum is intended to generate random motion of the parts, and the geometric edges favour this movement.

Preferably, the drum is made of a non-conductive material, for example, plastic.

Preferably, the drum is connected to a drive mechanism that provides its rotational movement, which may be concentric or eccentric, with variable speed and direction of rotation, and optionally adjustable through control means.

Preferably, the drum includes an opening to allow the passage of the projection beam of electrically active solid particles. Furthermore, the device preferably comprises means to regulate the incidence of said projection beam inside or outside the drum, as required.

Preferably, the drum includes evacuation means for the electrolyte, consisting on electrically active solid particles after they have impacted the metal surface of the part or parts to be treated, where said evacuation means in a preferred embodiment of the invention, consist of a mesh structure and/or perforated surface that constitute the drum walls, allowing the electrolyte to fall outside the drum by gravity through the meshed structure and/or perforated surface.

Preferably, the drum is connected to means that allow for the adjustment of its angle, so that its inclination can be varied as required in each case. Preferably, these means consist of an articulated support which, that in addition to transmitting the rotary motion to the drum, allow for its inclination adjustment.

Preferably, the drum includes a conductive anode/cathode, whose geometry must allow for its interaction with the parts and for the electrical contact.

Preferably, said anode/cathode also allows for the electrolyte evacuation.

### FIGURE DESCRIPTIONS

To complement the description provided and in order to assist a better understanding of the characteristics of the invention, this specification is accompanied, as an integral part of it, by a set of drawings which, in an illustrative and non-limiting manner, depict the following:
Figure 1: Shows a schematic elevation view of a device, subject of invention, showing its main parts and components;
Figure 2: Shows a schematic perspective view of an example of a rotating drum of a device subject of invention, where its drive and angular adjustment mechanisms can be observed; and
Figure 3: Shows a schematic perspective view of an example of a housing in which a device subject of invention, illustrating its overall external configuration.

### PREFERRED EMBODIMENT OF THE INVENTION

In view of the aforementioned figures, and according to used numbering, an example of a non-limiting embodiment of the device for polishing surfaces of metal parts by means of the projection of electrically active solid particles, preferably using a transport liquid medium that is preferably non-conductive or less conductive than the electrically active solid particles, according to the present invention, which comprises what is described in detail below.

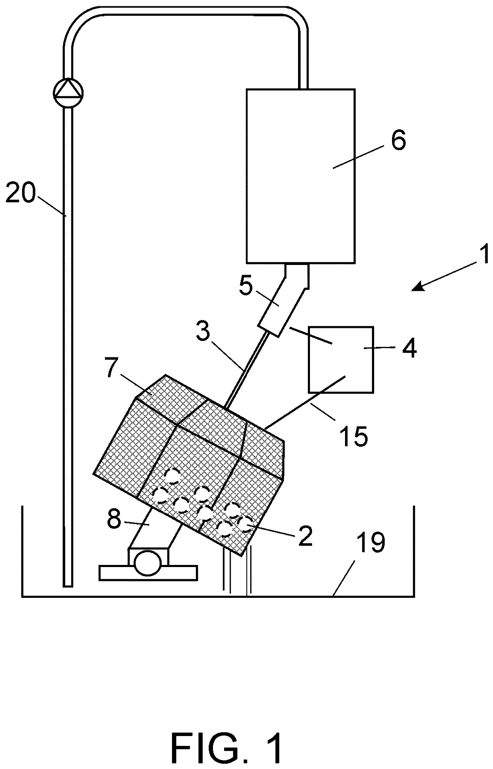

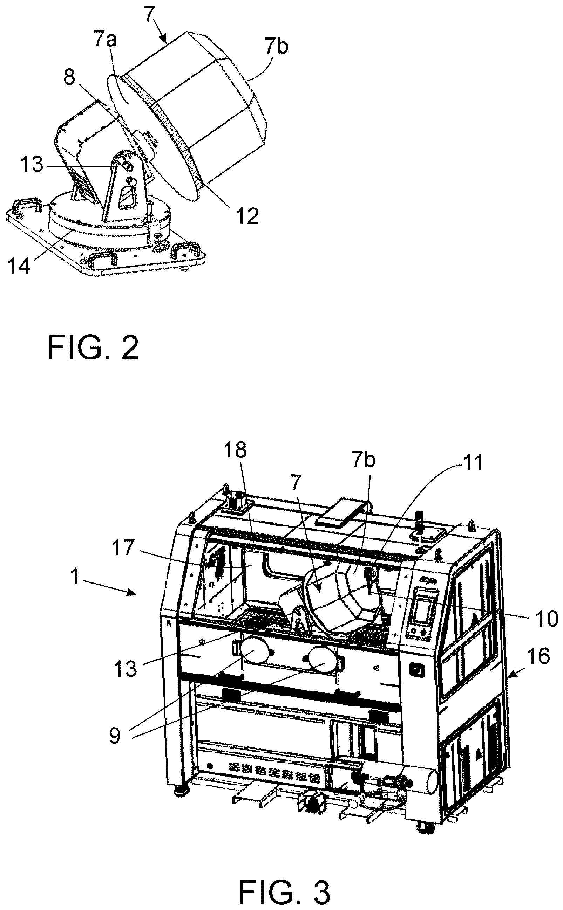

Thus, as observed on Figures 1 and 2, the device (1) of the invention, applicable for polishing surfaces of metallic parts (2) by means of a beam of electrically active solid particles (3) or electrolyte, comprises, in a known manner, at least one electric power source (4) with an electrode (5) that transmits electrical charge to the beam of solid particles (3), preferably with a transport liquid medium that is preferably non-conductive or less conductive than the electrically active solid particles, supplied from a delivery tank (6), and means for projecting said beam of electrically active solid particles (3), preferably with a transport liquid medium, onto the surface of the parts (2) to be treated.

Based on this structure, the device (1) is distinguished by comprising at least one rotating drum (7) designed to house one or more parts (2) including a metallic surface to be treated, directing the beam (3) of electrically active solid particles, preferably with a transport liquid medium, onto them while they are being tumbled inside said drum (7), and are not fixed to said drum.

Preferably, the drum (7) has a polygonal configuration, with 6, 8 or 12 faces, which promote the bouncing of the part or parts (2) inside as the drum (7) rotates, so that the beam (3) of projected particles, preferably with a transport liquid medium, impacts all of their surfaces. In the example shown in Figure 2, the drum (7) is a hollow polygonal body with 6 faces.

Preferably, the drum (7) is made of plastic or another non-conductive material.

Preferably, the drum (7) rotates along its own axis as it is connected to its posterior part (7a) to a rotary drive mechanism (8), preferably an electric motor. The rotary movement imparted to the drum (7) by said rotary drive mechanism (8), in a preferred embodiment, is a concentric rotational movement. In an optional embodiment, it is an eccentric rotational movement.

In any case, preferably, the rotary drive mechanism (8) includes control means (9) to regulate the speed and direction of the rotary motion provided to the drum (7).

Preferably, the drum (7) has an opening at its front part (7b), preferably a circular opening, suitable for allowing the passage of the beam (3) of electrically active solid particles.

Preferably, the device (1) comprises means for regulating the incidence of the beam (3) of electrically active solid particles, preferably with a transport liquid medium, inside or outside the drum (7), which, for example, consist of a movable and/or articulated mounting (10) of the beam projection means onto a support structure (11).

Preferably, the drum (7) includes evacuation means (12) for the electrolyte, i.e., the electrically active solid particles after they have impacted the metallic surface of the part or parts (2) to be treated.

In a preferred embodiment, said evacuation means (12) consist of a mesh and/or perforated surface located on at least a portion of the walls of the drum (7), such that the electrolyte falls out of the drum (12) by gravity as it rotates.

Preferably, the drum (7) includes means for adjusting its angular inclination (13), which, for example, are defined by an articulated support structure mounted on a pivot axis. Preferably, the drum (7) also includes means for adjusting its horizontal orientation (14), for example, defined by a circular pivot mount.

Preferably, the drum includes a conductive anode/cathode (15) that allows interaction between the parts (2) to be treated and the electrical power source (4).

Referring to Figure 3, it can be seen that in a preferred embodiment, the device (1) is integrated into a housing (16) in the form of a machine with a closed structure, so that all of its components are conveniently protected inside. It comprises an upper compartment (17), where the rotating drum (7) and the beam projection system (3) of electrically active solid particles, preferably with a transport liquid medium, are located. A closure cover (18) is provided to cover said compartment (17) and allow the device (1) to operate safely for the user, who can control the position, speed, and rotation direction of the drum (7) using the control means (9) located externally on said housing (16).

Preferably, the device (1) includes a tray (19) as a collector for the electrolyte and a recirculation system (20) that returns it to the delivery tank (6).

Having sufficiently described the nature of the present invention and how to put it into practice, no further explanation is considered necessary for any expert in the field to understand its scope and the advantages it offers.

## Claims

1. Device for polishing surfaces of metal parts by means of projection of electrically active solid particles capable of ionic transport, preferably with a transport liquid medium, comprising at least one electric power source (4) with an electrode (5) that transmits electrical charge to a beam of solid particles (3) supplied from a delivery tank (6), and means for projecting said electrically active solid particles (3), preferably with a transport liquid medium, onto the surface of the part(s) (2) to be treated, **characterized in that** it comprises at least one rotating drum (7) designed to house one or more parts (2) with the metal surface to be treated, such that the beam of electrically active solid particles (3) impacts them while they are tumbled inside the drum (7), wherein the drum (7) includes evacuation means (12) for the solid particles (3) such that the particles that enter the drum (7) are evacuated through the evacuation means (12) while the parts (2) remain inside the drum (7).

2. Device according to claim 1, **characterized in that** the drum (7) has a polygonal configuration.

3. Device according to claim 1 or 2, **characterized in that** the drum (7) is made of non-conductive material.

4. Device according to any of the preceding claims, **characterized in that** the drum (7) rotates by means of a rotary drive mechanism (8) to which it is connected at its rear end (7a).

5. Device according to claim 4, **characterized in that** the rotary drive mechanism (8) is an electric motor.

6. Device according to any of claims 4 or 5, **characterized in that** the rotary drive mechanism (8) imparts concentric rotational movement to the drum (7).

7. Device according to any of claims 4 or 5, **characterized in that** the rotary drive mechanism (8) imparts eccentric rotational movement to the drum (7).

8. Device according to any of claims 4 to 7, **characterized in that** the rotary drive mechanism (8) comprises control means (9) to regulate the rotation speed and direction of the drum (7).

9. Device according to any of the preceding claims, **characterized in that** the drum (7) includes a front opening (7b) to allow the passage of the beam (3) of electrically active solid particles.

10. Device according to any of the preceding claims, **characterized in that** it includes means to regulate the incidence of the projection of the beam (3) of electrically active solid particles, preferably with a transport liquid medium, inside or outside the drum (7).

11. Device according to any of the preceding claims, **characterized in that** the evacuation means (12) comprise a mesh (12) and/or perforated surface arranged in at least a portion of the drum walls (7).

12. Device according to any of the preceding claims, **characterized in that** the drum (7) includes means to regulate its angular inclination (13).

13. Device according to any of the preceding claims, **characterized in that** the drum (7) includes a conductive anode/cathode (15) that enables interaction with the part(s) (2) to be treated and connection with the electric power source (4).

14. Method for polishing surfaces of metal parts by means of projection of electrically active solid particles capable of ionic transport, preferably using a transport liquid medium, comprising at least one electric power source (4) with an electrode (5) that transmits electrical charge to a beam of solid particles (3) supplied from a delivery tank (6), and means for projecting said electrically active solid particles (3), preferably with a transport liquid medium, onto the surface of the part(s) (2) to be treated, **characterized in that** it comprises a step in which the beam of electrically active solid particles (3) is directed onto one or more parts (2) with a metal surface to be treated housed in a rotating drum (7) with evacuation means (12) for the solid particles (3), such that the particles entering the drum (7) are evacuated through the evacuation means (12) while the parts (2) remain inside the drum (7).
